# EUROPEAN PATENT APPLICATION

(11) **EP 1 528 540 A1**
(43) Date of publication of application: **04.05.2005**
(21) Application number: 03256831.3
(22) Date of filing: 29.10.2003
(51) Int. Cl.: G11B 5/584, G11B 21/10

(54) **Timing based servo pattern incorporating band encoding**

(71) Applicant: Storage Technology Corporation, Louisville, CO 80028-4309 (US)
(72) Inventor: Trabert Steven G., Boulder, Colorado 80305 (US); Wojciechowski Matthew P., Westminster, Colorado 80031 (US)
(74) Representative: Gill, David Alan

(57) **Abstract**

Identification of servo tracks is provided by adding one or more additional symbols to the write elements of at least some tracks on a servo recording head. The additional symbols are ignored for timing purposes, as they are not necessarily symmetrical, but the added symbols provide identification by their alterations on the otherwise identical patterns.

## Description

This invention relates generally to recording and reading data from magnetic storage media and, more particularly, to servo control systems that maintain the position of a magnetic head relative to tracks in magnetic tapes.

As the magnetic storage of information becomes more sophisticated, greater amounts of data are packed into smaller volumes of space. In storing large amounts of data on a magnetic tape, multiple "tracks" of data are stored paralleling the length of the tape. The number of tracks that can be stored on a particular width of tape depends on the sensitivity of the technology used, but it is currently possible to have hundreds of tracks on a ½ inch wide magnetic tape.

A major hurdle in recording and reading data from these hundreds of tracks is the lateral movement of the tape media as it traverses the read/write head. This is overcome by manufacturing the tape with recorded tracks of servo information at various lateral locations across the tape. These servo tracks provide information that allow the servo mechanisms in a tape transport to correctly position the head with respect to the data tracks.

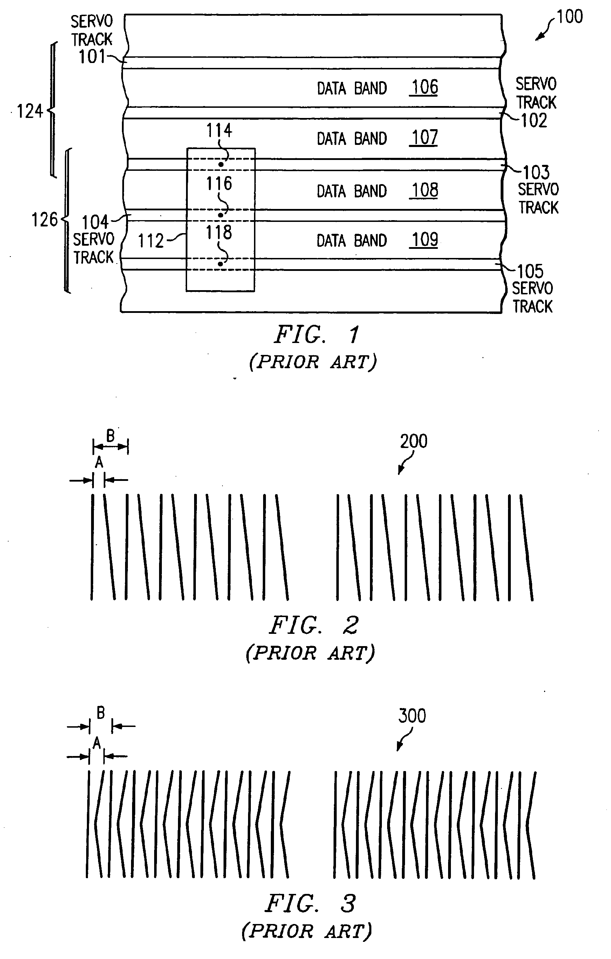

**Figure 1** shows a diagram of a tape and read/write head. Tape 100 has a number of servo tracks **101-105**. Data is stored in bands **106-109** between servo tracks 101-**105**, with each data band containing a given number of tracks, depending on the technology. In these examples, read/write head **112** contains three servo read elements **114, 116, 118** and a number of data read/write elements that are not specifically shown; read/write head **112** can be positioned over an upper portion **124** or a lower portion **126** of tape **100**. Read/write head **112** is made wider than the tape so that no matter what its position, the head **112** supports tape **100**. Servo read elements **114**, **116, 118** read the information from the servo tracks; from this, the servo mechanism can calculate any movements necessary to maintain the proper position of read/write head **112** with regard to tape **100**.

The servo tracks, in addition to providing positioning information for the servo mechanisms, can be encoded to carry additional useful information, such as identifying the individual servo tracks and the current longitudinal position along the tape.

There are a number of different methods of coding information in the patterns written in the servo tracks. One very useful method is timing-based coding, as it provides a method of position sensing that is insensitive to reading speed. This method is discussed in U.S. Patent 6,021,013, which is hereby incorporated by reference. In this patent, each servo track is written with a repeating cyclic sequence of two patterned lines whose separation from each other varies in a consistent manner across the width of the servo track, with periodic gaps in the pattern to serve as a starting point for the pattern. Two exemplary patterns **200** and **300** from this patent are reproduced in **Figure 2** and **Figure 3**. The time A between the detection of two dissimilar lines is compared to the time **B** between the detection of two similar lines. The value of A:B reveals how far off center the servo read head is at the time of reading, and thus the amount of correction necessary to properly locate the read head. Using this ratio rather than distances between symbols allows for the fact that the tape can be moving at different speeds. Thus, it is possible to maintain a position over a given band of data.

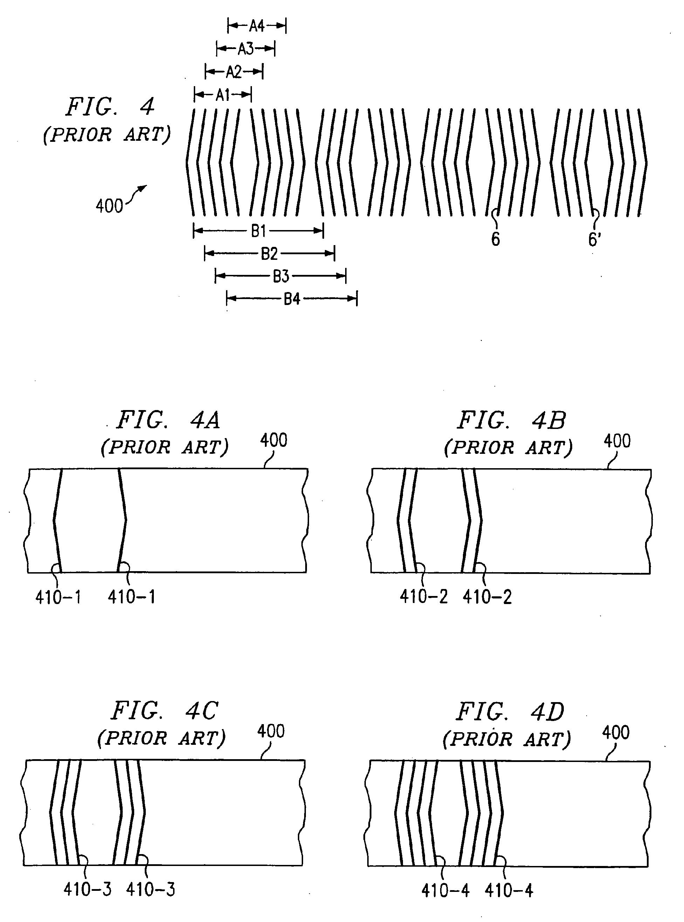

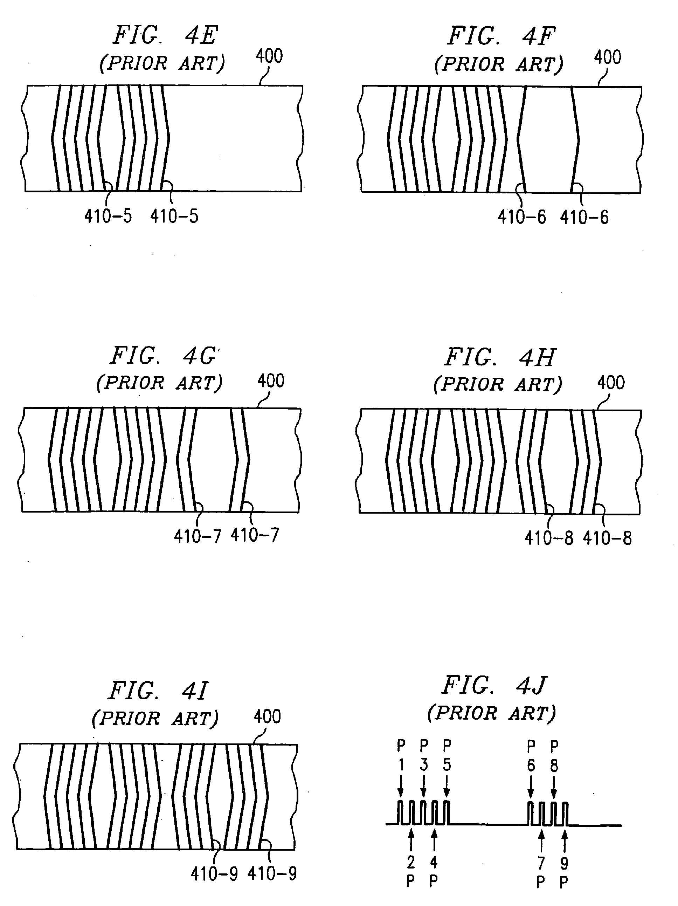

While the two patterns **200, 300** demonstrate the principles of timing-based servo patterns, it has been found that single comparisons of A and B are not enough for accurate measurements. Therefore, nested patterns, such as pattern **400** shown in **Figure 4**, are more commonly used. Using a nested pattern of four chevrons, four measurements can be taken across a given length of tape; their averaged value of A:B is much more accurate. The detection of an expected sequence of stripes (generally, two sets of five followed by two sets of four) also provides an efficient means of error detection, as the software can immediately detect when an expected input is not found.

To provide the high accuracy necessary, the tape is recorded on a special servo-track machine. The first portion of the recording head contains an erase head, which erases the entire width of the tape, followed by a single-coil, multi-gap write element, capable of writing all servo tracks on a tape in one pass. Unlike normal data write elements, which are continuously powered and switch from one polarity to the opposite polarity repeatedly, the servo write element is switched on and off and normally writes in only one polarity. Additionally, the write element is patterned, so that each time it is powered, it produces an image on the tape of the patterned write element. By controlling the switching of the write element as the tape moves across the head, the pattern is repetitively written on each of the servo tracks. For a nested pattern, images of both the left and right component of a pattern are written simultaneously to maintain the accuracy.

Creation of the pattern shown in **Figure 4** is demonstrated in **Figures 4A-J**. In this example, the figures show the same section of the tape as it moves from right to left across the write head. The portion of the tape that appears white has already been erased. **Figure 4J** is a timing pattern that shows when the write element is pulsed, while **Figures 4A-I** show the tape sequentially after each pulse. Looking at **Figure 4A,** the first pulse **P1** of the write element has produced an image of the pattern that is on the write element, creating the two-chevron pattern **410-1**. Figure **4B** shows the tape after pulse **P2** has written pattern **410-2, Figure 4C** shows it after pulse **P3** has written pattern **410-3**, Figure 4D shows it after pulse **P4** has written pattern **410-4**, **Figure 4E** shows it after pulse **P5** has written pattern **410-5**. After the initial five pulses, the write element is not pulsed again until the initial five nested chevrons 410-1 through **410-5** have all passed the write element, then four further pulses **P6-P9** write the pattern of four nested chevrons **410-6** through **410-7**. The process will continue until all servo patterns are written along the entire length of a tape.

In order for the timing based servo patterns to work properly, several factors that can adversely affect the outcome must be taken into account. First, the servo read elements must be much narrower than the servo track, so that each servo read element detects only a narrow width of the pattern created. This serves to minimize tracking errors due to false position signals. Secondly, all of the pattern lines are written using a uni-polar write current and the timing is measured only between magnetic flux transitions having the same polarity (e.g., always timing the transition at the beginning of a line). Variations in the write head or the writing process, as well as other difficulties can cause apparent shifts in the timing of transitions having opposite polarities, so opposite transitions are never compared.

In order to position the read head **112** of **Figure 1** over the correct band of data **106, 107, 108, 109**, different patterns are used for different servo tracks. For example, if pattern 200 is used on three servo tracks **101, 102, 105** of **Figure 1**, and pattern **300** is used on servo tracks **103** and **104**, then by reading two adjacent servo tracks and recognizing their patterns, it is possible to determine which data band is between the two servo tracks, using the following Table 1:

| **Upper servo pattern** | **Lower servo pattern** | **Data band** |
|---|---|---|
| 200 | 200 | 106 |
| 200 | 300 | 107 |
| 300 | 300 | 108 |
| 300 | 200 | 109 |

Within the servo tracks, additional information, such as the longitudinal location, can be encoded by varying specific portions of the pattern, such as the distance between successive groupings of the pattern. Because servo tracks are typically recorded at a much lower density than the data tracks, they can be read at high speeds. This ability to read longitudinal data at high speeds makes searches much more efficient.

While the beauty of a timing-based servo system lies in the fact that it utilizes comparisons rather than individual symbols, this very concept also confines it. Since meaning is only carried in comparative relationships, the density of information is necessarily low. It would be desirable to carry additional information in the timing pattern without destroying the timing pattern itself.

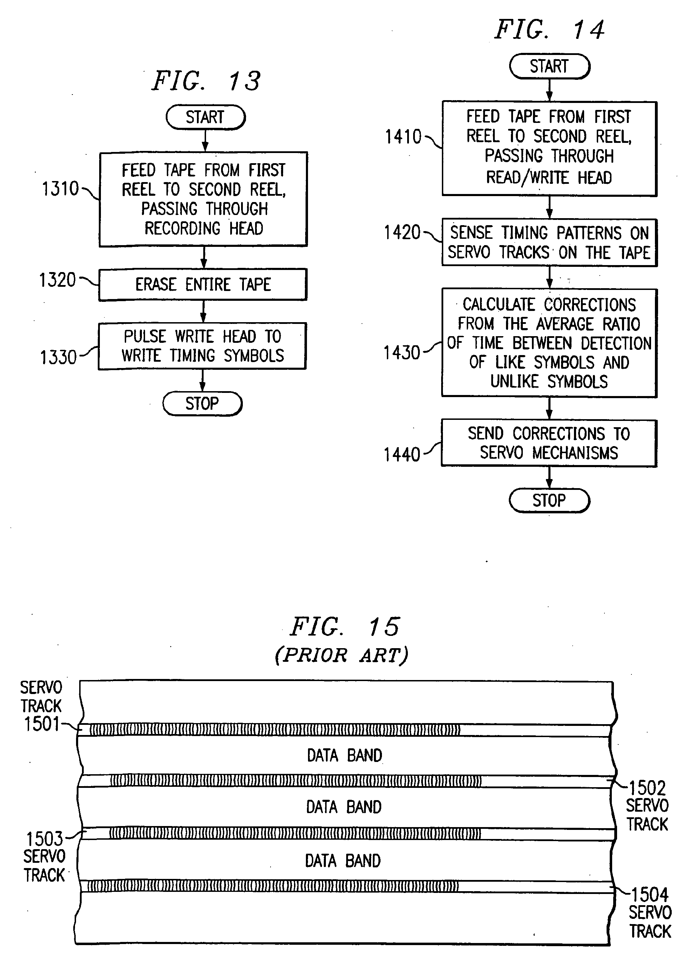

One solution that has been disclosed is U.S. Patent 6,169,640. This patent discloses using, for example, four servo tracks on which the timing patterns are identical, but not synchronized with each other. Rather, as seen in **Figure 15**, the two inner tracks **1502** and **1503** are offset a given amount from the two outer tracks **1501** and **1504**. The result is that each adjacent pair of servo tracks exhibits a different timing relationship as compared to the other pairs of servo tracks, providing identification of the servo tracks by this offset. However, this scheme comes with its own drawback. Since the servo tracks are not synchronized with each other, the software must be concerned with phase differences between the servo tracks when creating a position error signal. It would be beneficial to identify the tracks without losing synchronicity.

The present invention seeks to provide for recording media, a related write head and related writing detection and control method having advantages over known such media, heads and method.

Rather than the simple nested patterns currently used, the present invention adds additional symbols to the pattern of at least some of the tracks written by the servo write element. The patterns still contain only the two azimuthally inclined symbols of the prior art, but the servo patterns created are no longer symmetrical. The lack of symmetry means that not all symbols in the pattern will be used for timing purposes; however, they can be used to identify the servo track, and hence the data bands between the servo tracks. In a preferred embodiment, spaces between the symbols separate the symbols into groups, the number of symbols in each group defines the coding for the tracks.

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** shows a tape and a read/write head positioned to read the tape.
**Figure 2** shows one pattern for a timing based servo track.
**Figure 3** shows an alternate pattern for a timing based servo track.
**Figure 4** shows an alternate nested pattern for a timing based servo track.
**Figures 4A-I** show the sequence as a nested pattern is created, and **Figure 4J** shows the timing pattern for pulsing the write element to create this pattern.
**Figures 5A-I** show writing a first servo track according to a first embodiment of the invention and **Figure 5J** is the timing pattern.
**Figures 6A-I** show writing a second servo track according to a first embodiment of the invention, while **Figure 6J** again shows the timing pattern.
**Figures 7A-C** show writing a first servo track according to a second embodiment of the invention, with the process shown respectively after one pulse, five pulses, and nine pulses. **Figure 7D** shows the timing pattern.
**Figures 8A-C** show writing a second servo track according to a second embodiment of the invention, with the process shown respectively after one pulse, five pulses, and nine pulses. **Figure 8D** is the timing pattern.
**Figures 9A-C** show writing a first servo track according to a third embodiment of the invention; **Figure 9D** is a corresponding timing pattern.
**Figures 10A-C** show writing a second servo track according to a third embodiment of the invention; **Figure 10D** is a corresponding timing pattern.
**Figure 11** shows a tape encoded with two servo patterns according to the third embodiment above.
**Figure 12A** shows a simplified diagram of a servo writer system that can implement the innovative system of servo tracks; **Figure 12B** shows a simplified diagram of a tape drive system that can use the innovative system of servo tracks.
**Figure 13** gives a flow for creating the servo tracks on a tape.
**Figure 14** gives a flow for using the tape.
**Figure 15** shows a prior art solution to identifying the servo tracks.

In the following discussion of the servo patterns, a grid is shown above many of the patterns to mark positions along the tape. These grids are, of course, not present on the tape, but are shown for ease of understanding only.

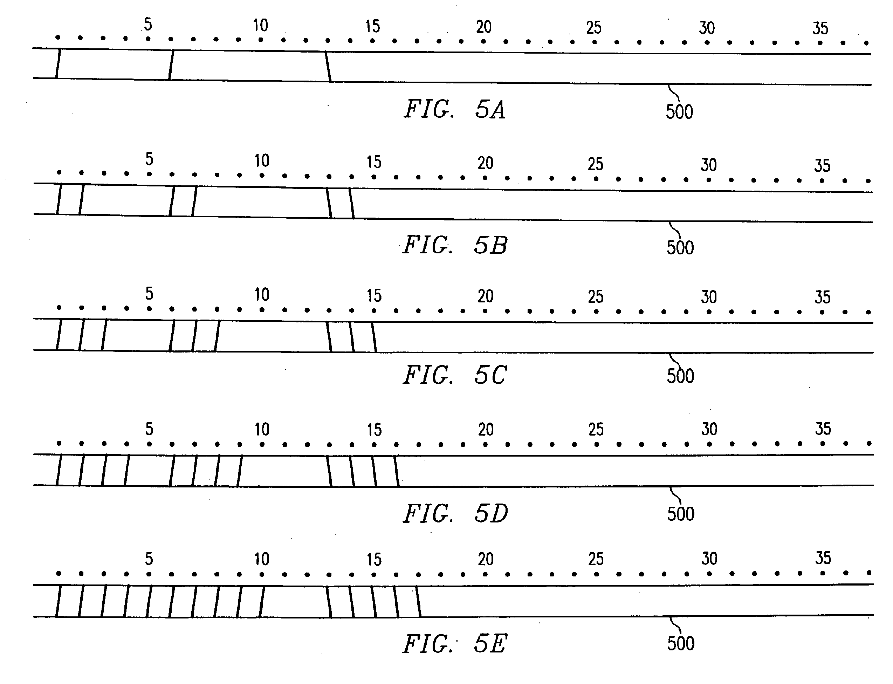

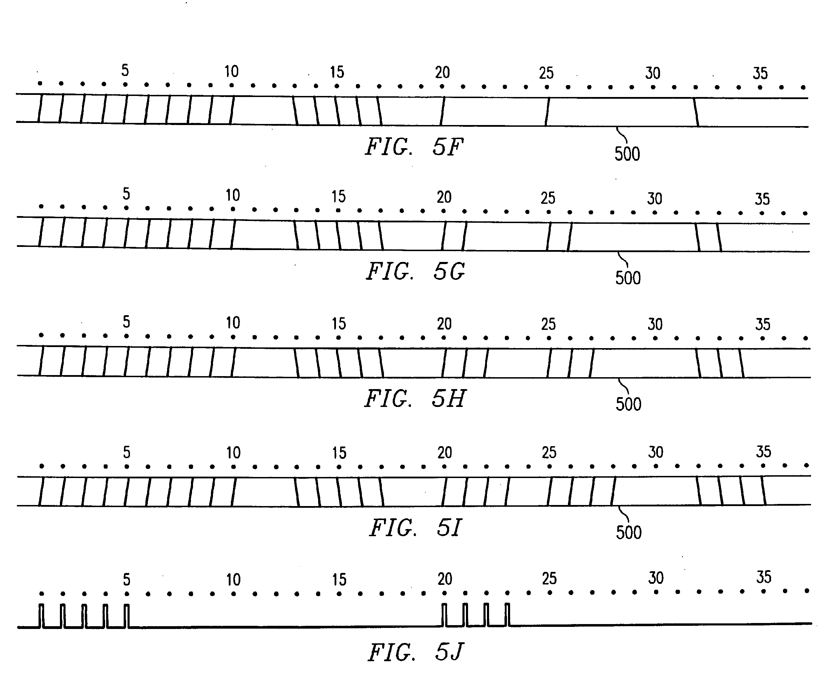

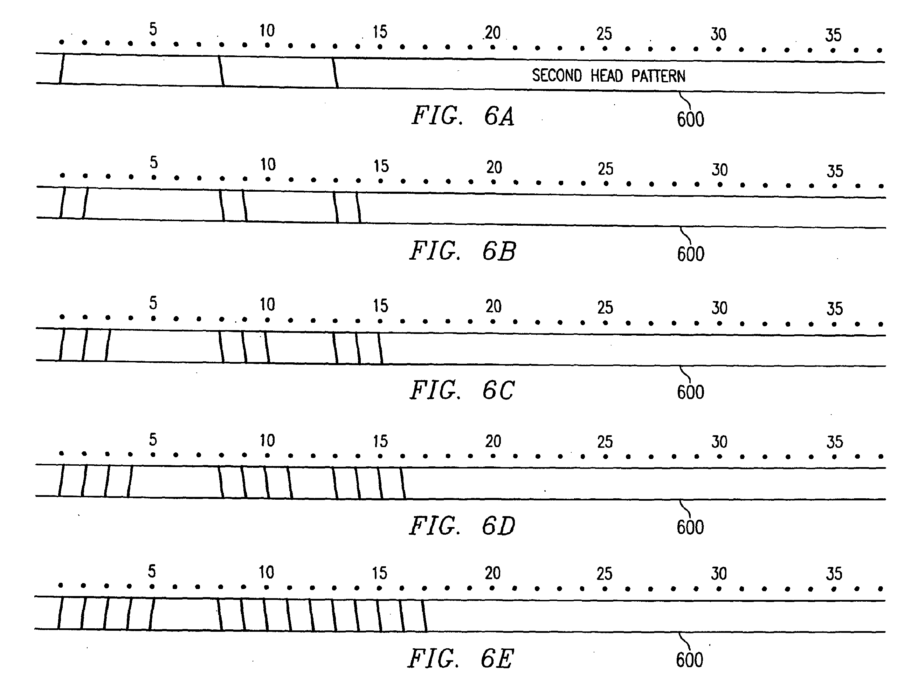

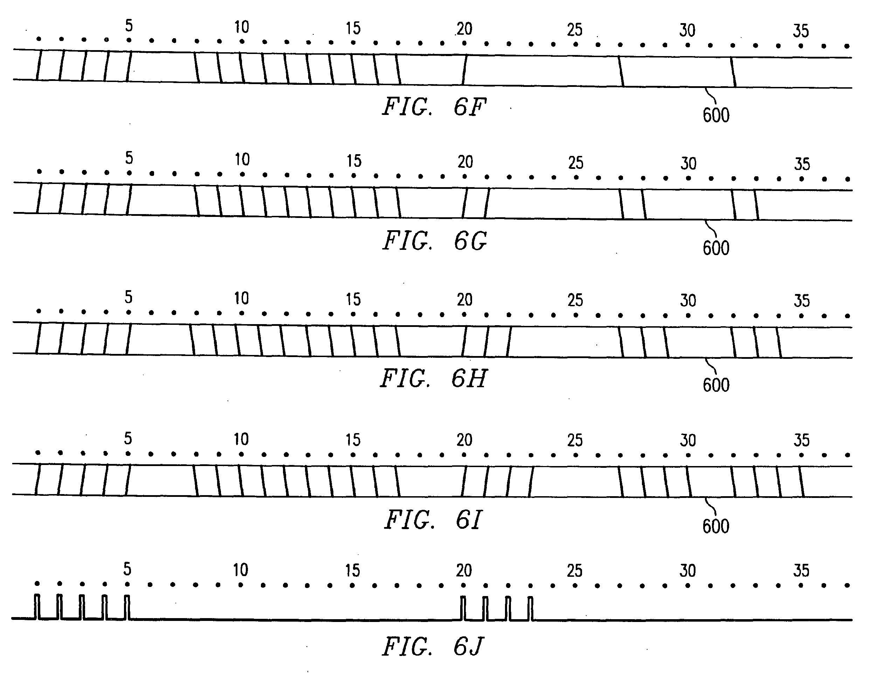

In **Figures 5A-I** and **6A-I,** we see two separate tracks on a tape as they are written with their respective patterns **500** and **600**. The patterns of the write element extend across the entire width of the servo track. The first figure for each track is thus the image that will be created after the first pulse of the write element. In this embodiment, the servo track **500**, seen in **Figure 5A**, produces right-inclined lines at positions 1 and 6 and a left-inclined line at position 13, while the servo track **600**, seen in **Figure 6A**, produces a right-inclined line at position 1 and left-inclined lines at positions 8 and 13.

In **Figures 5B** and 6B, the write element has pulsed again one position later on the tape, forming a second image of the write element, displaced from the first by one position. In the following **Figures 5C-I** and **6C-I**, the servo pattern is shown at each step as it is created using the timing diagram of **Figures 5J** and **6J**, with a first set of five pulses followed by a longer movement of the tape, then a second set of four pulses, just as in the previous example. Looking at the groupings of the symbols and the number of symbols in each group, the first track would decode as 10, 5, 4, 4, 4, while the second track would decode as 5,10,4,4,4.

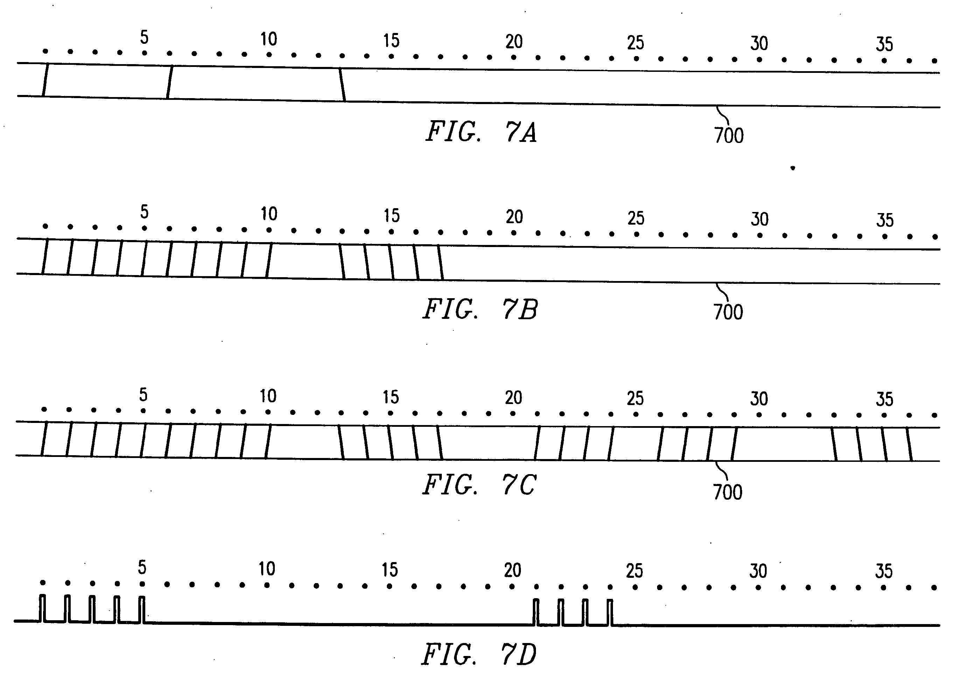

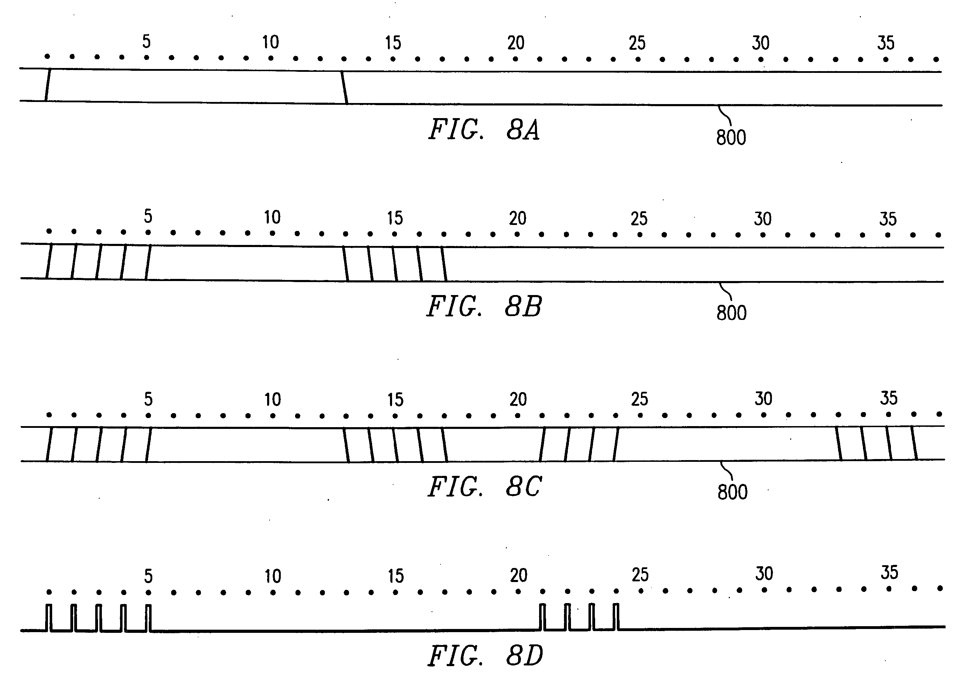

An alternate embodiment of the servo track coding is shown in **Figures 7A-C** and **8A-C** on servo tracks **700** and **800** respectively, following the timing patterns reproduced as **Figures 7D** and **8D**. As seen in **Figures 7A** and **8A,** only track **700** contains a third symbol in its patterned write element. **Figures 7B** and **8B** show the partial patterns after five pulses; **Figure 7C** and **8C** show the tracks **700** and **800** after the tape is advanced and a further four pulses. In this embodiment, track **700** decodes as 10,5,4,4,4 and track **800** decodes as 5,5,4,4.

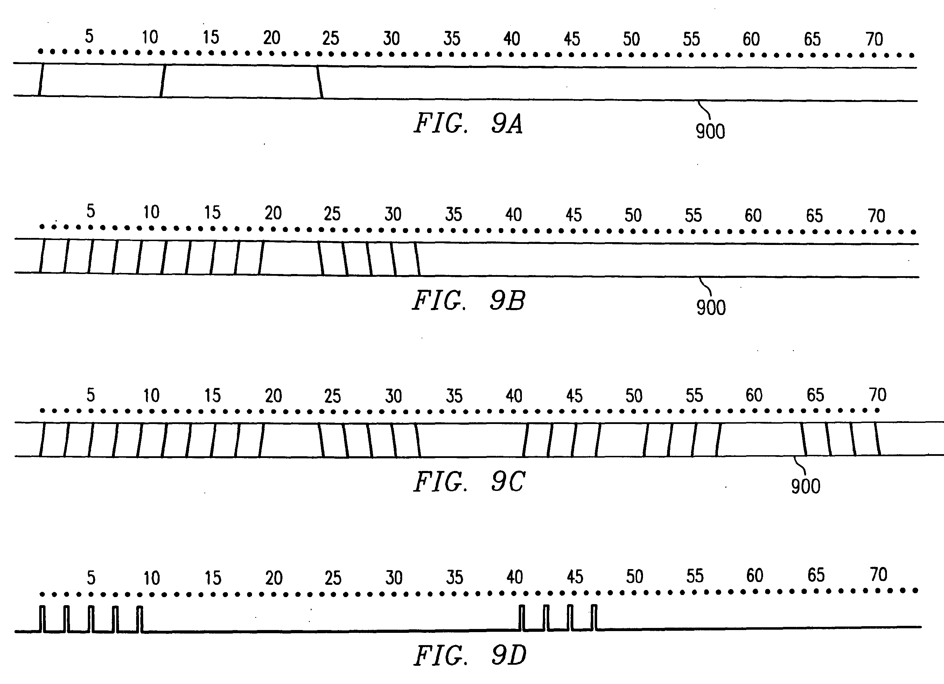

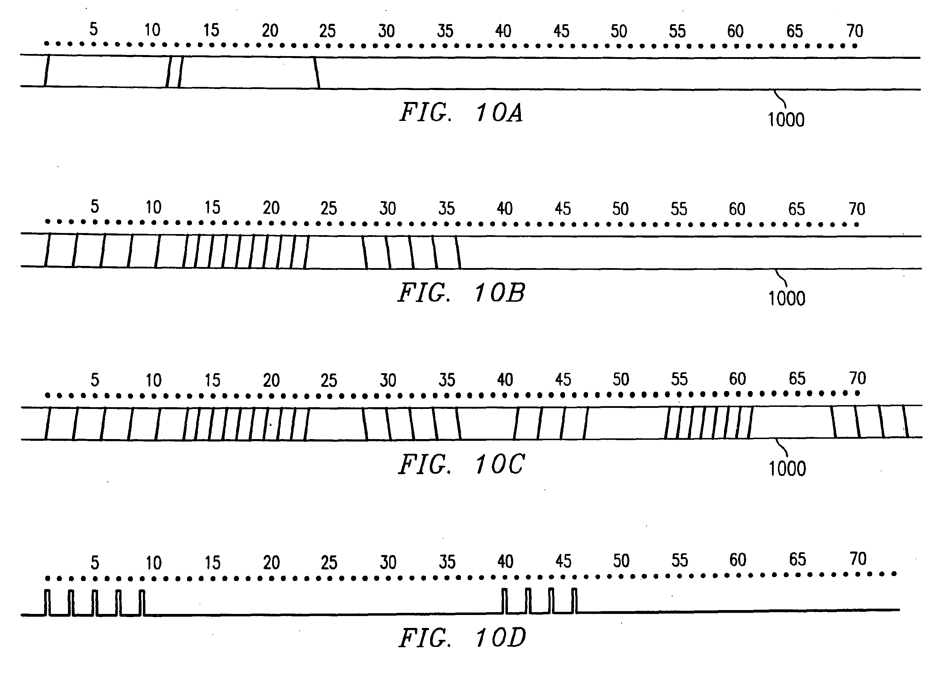

In a further alternate embodiment, the coding of a track lies not in the number of symbols in each group, but in how closely the transitions are spaced. **Figures 9A** and **10A** show embodiments of the write element patterns for servo tracks **900** and **1000** respectively. Both tracks **900** and **1000** contain a right-inclined line at positions 1 and 11 and a left-inclined line at position 24, but only track **1000** has a symbol at position 12. The timing for this embodiment, shown in **Figures 9D** and **10D**, is slightly different from the previous versions, as the tape is allowed to move two positions between adjacent pulsing of the erase heads. In **Figures 9B** and **10B**, we see the pattern on tracks **900** and **1000** created by the first five pulses, **Figures 9C** and **10C** show the pattern on tracks **900** and **1000** after advancing the tape and an additional four pulses. As a consequence of the additional symbol, the second track contains a much higher frequency of symbols in some portions than does the first track. This higher frequency can be detected by the servo hardware and used as identification.

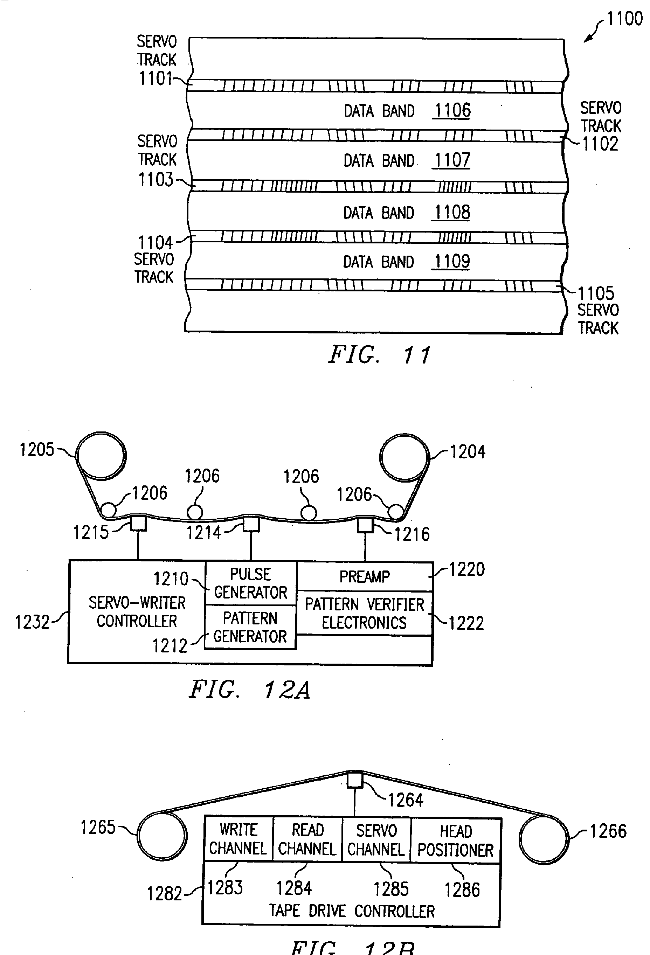

In **Figure 11**, we see a tape with five servo tracks **1101, 1102, 1103, 1104**, and **1105** and four data bands **1106, 1107. 1108**, and **1109** containing an unknown number of data tracks. Tracks **1101, 1102**, and **1105** contain the pattern shown in track **900** of **Figure 9C**, while tracks **1103** and **1104** contain the pattern shown in track **1000** of **Figure 10C**. Position of the head laterally across the tape can be determined by reading any two adjacent servo tracks and using the following Table 2:

| **Upper servo pattern** | **Lower servo pattern** | **Data band** |
|---|---|---|
| 900 | 900 | 1106 |
| 900 | 1000 | 1107 |
| 1000 | 1000 | 1108 |
| 1000 | 900 | 1109 |

**Figure 12A** is a simplified version of a servo writer that can implement the innovative system of servo tracks, while **Figure 13** gives a flow for creating the tape. These figures will now be discussed in terms of the overall flow. The tape runs between reel **1205** and reel **1204**. Tensioners **1206** help keep a constant tension on the tape for smoother operation. Erase head **1215** continuously erases the tape, followed by write head **1214**, which is pulsed to write the pattern, and read head **1216**, which verifies that the pattern was correctly written. Controller **1232** controls the movement of the reels **1204** and **1205**, as well as the erase head **1215**, write head **1214** and read head **1216**. In writing servo tracks to a tape, the tape moves from reel **1205** to reel **1204** as all servo tracks are written in one pass **(step 1310)**. As the tape moves, it is first erased **(step 1320),** then the write head is pulsed repeatedly, each time creating one copy of each servo track's pattern. The writing of this repetitive pattern creates the servo track(**step 1330**). On the hardware side, pattern generator **1212** processes the given pattern and controls the pulse generator **1210** so that the write head **1214** is driven to create the desired pattern. Once the signal is written, it is verified by reading the signal, amplifying the signal in preamp **1220** and sending it to the pattern verifier electronics **1222.** Once the entire tape has been processed, the tape is ready to use for data storage.

Figure **12B** shows a tape drive and tape that is being used for data storage, while **Figure 14** shows a flow chart for the tracking mechanisms. The tape is connected so that it runs from a first reel **1265** to a second reel **1266,** passing across read/write head **1264** (**step 1410**). Tape drive controller **1282** controls the movement of reels **1265** and **1266.** The controller **1282** contains write channel **1283** and read channel **1284,** used to control the activity of read/write head **1264,** servo channel **1285** that carries signals from the servo read heads, and head positioner **1286**, which controls the servo mechanisms (not specifically shown) by which the lateral movement of the head is controlled. Whether the tape is being written to or read from, the servo tracks are read and their patterns sensed (**step 1420**). The times between detection of like symbols is measured, as are the times between detection of mated pairs of unlike symbols; average times are calculated **(step 1430).** From the calculations, corrections are figured and sent to the servo mechanisms to act upon **(step 1440).**

The simple innovation disclosed in this application provides the possibility of increasing the efficiency of information stored in the servo tracks by allowing the track identification to be stored in additional data other than the timing portion.

The description of the present invention has been presented for purposes of illustration and description, and is not intended to be exhaustive or limited to the invention in the form disclosed. Many modifications and variations will be apparent to those of ordinary skill in the art. The embodiments were chosen and described in order to best explain the principles of the invention, the practical application, and to enable others of ordinary skill in the art to understand the invention for various embodiments with various modifications as are suited to the particular use contemplated.

For instance, while tapes were disclosed having only specific combinations of two different servo patterns, any number or combination of servo patterns can be utilized.

Additionally, the use of patterned write heads has been disclosed for writing the servo patterns, but other methods can be devised that do not require the write heads to be patterned.

It is further noted that servo tracks can also be referred to as servo bands; the meaning is the same.

## Claims

1. Recording media on which information can be recorded, said recording media comprising:
a surface capable of being encoded;
at least one servo track on said surface; and
a plurality of timing-based servo patterns written on respective ones of said at least one servo track;
wherein a plurality of first sections of each of said at least one servo pattern is identical and is in synchronicity along the length of said tape, and
wherein a plurality of second sections of said at least one servo pattern is not identical.

2. Media as claimed in Claim 1, wherein said plurality of first sections form nested timing patterns.

3. Media as claimed in Claim 1, wherein said plurality of second sections provides identification for said servo tracks and for data bands.

4. Media as claimed in Claim 1, 2 or 3, wherein a sequence of the number of symbols in each contiguous grouping within given servo patterns provides an identification for said plurality of tracks.

5. Media as claimed in Claim 1, 2 or 3, wherein a frequency of symbols on each servo track provides an identification for said plurality of servo tracks.

6. Media as claimed in Claim 1, 2, 3, 4 or 5, wherein said servo tracks can be read at high speeds.

7. A write head for simultaneously writing a plurality of timing-based servo tracks, and comprising:
a write element aligned to write a first set of patterned symbols to a first servo track; and
a write element aligned to write a second set of patterned symbols to a second servo track;
and arranged such that said first set of patterned symbols and said second set of patterned symbols are written simultaneously;
wherein a first portion of said first set of patterned symbols and a first portion of said second set of patterned symbols are identical and are aligned to be written at the same longitudinal location; and
wherein not all of said first set of patterned symbols and said second set of patterned symbols are identical.

8. A write head as claimed in Claim 7, wherein said first portion of said first set of patterned symbols and said first portion of said second set of patterned symbols form nested timing patterns.

9. A write head as claimed in Claim 7 or 8, wherein said write head is patterned.

10. A method of recording servo patterns on a magnetic tape, comprising the steps of:
moving a tape relative to a read/write head;
simultaneously writing a plurality of magnetized symbols to at least one servo track to form a plurality of servo patterns;
wherein first portions of each of said plurality of servo patterns are identical and are formed synchronously, and
wherein second portions of said plurality of servo patterns are identical.

11. A method as claimed in Claim 10, wherein said first portions form the nested timing portion of said servo patterns.

12. A method as claimed in Claim 10 or 11, wherein said plurality of servo patterns are written containing groupings of symbols and the number of symbols in said groupings provide identification of said servo tracks.

13. A method as claimed in Claim 10 or 11, wherein said plurality of servo patterns are written containing varying frequencies of symbols and said frequencies of symbols provide identification of said servo tracks.

14. A method of writing servo tracks, comprising the steps of:
creating a first servo track and a second servo track with a first set of symbols having a first azimuthal inclination and a second set of symbols having a second azimuthal inclination that is different from said first azimuthal inclination;
wherein first portions of said first servo track and of said second servo track are written identically and synchronistically and second portions of said first servo track and of said second servo track are not written identically.

15. A method as claimed in Claim 14, wherein said first portions of said first servo track and of said second servo track comprise nested timing patterns.

16. A method as claimed in Claim 14 or 15, wherein said second portions of said first servo track and of said second servo track control identification of said servo tracks.

17. A method as claimed in Claim 14 or 15, wherein identification of said servo tracks is carried in the grouping of said first set and said second set of symbols.

18. A method as claimed in Claim 14 or 15, wherein identification of said servo tracks is carried in the frequency of occurrence of said first set and said second set of symbols.

19. A method of detecting a servo pattern, comprising the steps of:
moving a tape relative to a read/write head;
sensing a plurality of first symbols that are azimuthally inclined in a first direction and a plurality of second symbols that are azimuthally inclined in a second direction, wherein said plurality of symbols are carried in a plurality of servo tracks on said tape;
within an occurrence of a pattern of said first and second symbols where n occurrences of said first symbol each have respective occurrences of said second symbol,
calculating a time A from the detection of each of said n occurrences of said first symbol and said respective occurrence of said second symbol;
calculating a time B from the detection of each of said n occurrences of said first symbol and an (n + 1) occurrence of said first symbol;
calculating an average time A and an average time B for said n occurrences;
calculating corrections in the motion of said read/write head according to the ratio (average distance A):(average distance B);
wherein said calculating steps are performed using occurrences of said first and said second symbol that are identical and synchronistically recorded across said plurality of servo tracks;
wherein remaining occurrences of said first or said second symbols are used to identify said servo tracks.

20. A method as claimed in Claim 19, wherein identification of said servo tracks is carried in the grouping of said first set and said second set of symbols.

21. A method as claimed in Claim 19, wherein identification of said servo tracks is carried in the frequency of occurrence of said first set and said second set of symbols.

22. A method of controlling a tape drive, said method comprising:
within a given repetition of a servo pattern:
identifying ones of a first symbol that have a respective occurrence of a second symbol;
using said ones of said first symbol that have a respective occurrence of said second symbol to determine lateral position on a tape; and
using ones of said first and second symbols that do not have a respective occurrence of the other symbol for track identification.

## Amended claims

### Amended claims in accordance with Rule 86(2) EPC.

**1.** A recording medium (1100) on which information can be recorded and stored, said recording medium comprising a surface capable of being encoded, a first servo track (1101) containing a first timing-based servo pattern written on said surface, a second servo track (1103) containing a second timing-based servo pattern written on said surface, said first and second servo tracks being at different lateral positions on said surface, said first timing-based servo pattern being formed of a first repeating cyclic sequence of first and second patterned lines, said first and second patterned lines being different from each other, said second timing-based servo pattern being formed of a second repeating cyclic sequence of said first and said second patterned lines, with the differences comprising:
wherein a first section of said first repeating cyclic sequence and a first section of said second repeating cyclic sequence each contain ones of said first patterned lines that are paired with ones of said second patterned lines, each pair of first and second patterned lines having a fixed distance between said first patterned line and said second patterned line; and
wherein, along the entire length of said recording medium, said first section of said first repeating cyclic sequence is located at a same longitudinal location on said recording medium as said first section of said second repeating cyclic sequence;
wherein a second section of said first repeating cyclic sequence is different from a second section of said second repeating cyclic sequence in either a symbol used or in a longitudinal location at which a symbol is written.

**2.** A recording medium according to Claim 1, wherein said matched pairs of said first and second patterned lines form nested timing patterns.

**3.** A recording medium according to Claim 1, wherein said second sections of said first and second repeating cyclic sequences provide identification for said servo tracks and for data bands (1106, 1107, 1108, 1109).

**4.** A recording medium according to Claim 3, wherein the number of occurrences of said first or second patterned lines in said second section of said first and said second servo patterns provides an identification for said servo tracks.

**5.** A recording medium according to Claim 1, wherein the frequency of said first or said second patterned lines in said second section of said first and said second servo patterns provides an identification for said servo tracks.

**6.** A write head (1214) for simultaneously writing a plurality of timing-based servo tracks, said patterned write head comprising a write element aligned to write a first set of first and second patterned symbols, which are different from each other, to a first servo track and a write element aligned to write a second set of said first and said second patterned symbols to a second servo track, the difference comprising:
said first set of patterned symbols and said second set of patterned symbols are written simultaneously;
a first portion of said first set and a first portion of said second set consist of at least one identical matched pair of said first patterned symbol and said second patterned symbol and said first portions are aligned to be written at the same longitudinal location; and
a second portion of said first set and a second portion of said second set contain unmatched ones of said first patterned symbol or unmatched ones of said second patterned symbol and said second portions contain either different ones of said first and second patterned lines or contain ones of said patterned lines written at different longitudinal points on a recording medium.

**7.** A write head according to Claim 6, wherein said first portion of said first set and said first portion of said second set form nested timing patterns.

**8.** A write head according to Claim 6, wherein said write head is patterned.

**9.** A method of recording servo patterns on a magnetic tape, comprising the steps of moving (1310) a tape from a first reel (1265), over a read/write head (1264), and onto a second reel (1266), erasing (1320) said tape, and simultaneously writing (1330) a first timing-based servo pattern to a first servo track and a second timing-based servo pattern to a second servo track, each of said timing-based servo patterns consisting of a repetitive sequence of a first patterned line and a second patterned line, said first and second patterned lines being different from each other, wherein a first portion of said first timing-based servo pattern and a first portion of said second timing-based servo pattern each consists of an identical series of paired symbols, each of said paired symbols consisting of one of said first patterned line and one of said second patterned line that are aligned a fixed distance apart, with said first portions of said first and second servo patterns aligned to be written at the same longitudinal point on said tape, the difference comprising,
a second portion of said first timing-based servo pattern and a second portion of said second timing-based servo pattern each comprises a series of either an unmatched one of said first patterned line or an unmatched one of said second patterned line, said second portions of said first and second servo patterns containing either different ones of said first and second patterned lines or containing ones of said patterned lines aligned to be written at different longitudinal points on said tape.

**10.** A method according to Claim 9, wherein said first portions form nested timing patterns.

**11.** A method according to Claim 9, wherein a choice of patterned lines in said second portion provides identification of said servo tracks.

**12.** A method according to Claim 9, wherein a frequency of appearance of one of said patterned linesprovides identification of said servo tracks.

**13.** A method according to Claim 9,
wherein said first patterned line has a first azimuthal inclination and said second patterned line has a second azimuthal inclination that is different from said first azimuthal inclination.

**14.** A method of detecting a servo pattern, comprising the steps of moving (1410) a tape from a first reel (1265), over a read/write head (1264), and onto a second reel (1266), sensing (1420) a plurality of first symbols that are azimuthally inclined in a first direction and a plurality of second symbols that are azimuthally inclined in a second direction, wherein said plurality of symbols are carried in a plurality of servo tracks on said tape, within an occurrence of a pattern of said first and second symbols where n occurrences of said first symbol each are paired with respective occurrences of said second symbol, calculating (1430) a time A from the detection of each of said n occurrences of said first symbol and said respective occurrence of said second symbol, calculating a time B from the detection of each of said n occurrences of said first symbol and an (n + 1) occurrence of said first symbol, calculating an average time A and an average time B for said n occurrences, calculating corrections in the motion of said read/write head according to the ratio (average distance A):(average distance B), the differences comprising:
said calculating steps are performed using paired occurrences of said first and said second symbol that are recorded at identical longitudinal locations on each of said plurality of servo tracks;
remaining occurrences of said first or said second symbols are used to identify said servo tracks.

**15.** A method according to Claim 14, wherein identification of said servo tracks is carried in the grouping of said first set and said second of symbols.

**16.** A method according to Claim 14, wherein identificatin of said servo tracks is carried in the frequency of occurrence of said first ans said second symbols.

**17.** A method of controlling a tape drive, said method comprising, within a given repetition of a servo pattern, identifying ones of a first symbol that have a respective, paired occurrence of a second symbol, the difference comprising,
using said ones of said first symbol that have a respective, paired occurrence of said second symbol to determine lateral position on a tape; and
using ones of said first and second symbols that do not have a respective, paired occurrence of the other symbol for track identification.
